Europäisches Patentamt

**European Patent Office**

**Office européen des brevets**

(19)

(11) Veröffentlichungsnummer: **0 218 014**
**A1**

(12) # EUROPÄISCHE PATENTANMELDUNG

(21) Anmeldenummer: **86109566.9**

(22) Anmeldetag: **12.07.86**

(51) Int. Cl.⁴: **B 01 J 37/00**

(30) Priorität: **10.09.85 DE 3532207**

(43) Veröffentlichungstag der Anmeldung: **15.04.87**
**Patentblatt 87/16**

(84) Benannte Vertragsstaaten: **AT BE CH DE FR GB IT LI LU NL SE**

(71) Anmelder: **Didier Engineering GmbH,**
**Alfredstrasse 28 Postfach 10 09 45, D-4300 Essen 1 (DE)**
Anmelder: **DIDIER-WERKE AG, Lessingstrasse 16-18,**
**D-6200 Wiesbaden (DE)**

(72) Erfinder: **Grimm, Daniel, Hauptstrasse 10,**
**D-6229 Schlangenbad-Bärstadt (DE)**
Erfinder: **Levkov, Biagoje, Dr., Rudolf-Vogt-Strasse 41,**
**D-6200 Wiesbaden (DE)**
Erfinder: **Flockenhaus, Claus, Prof. Dr.,**
**Tersteegenweg 16, D-4300 Essen 1 (DE)**
Erfinder: **Laue, Karl-Heinz, Bergische Strasse 41,**
**D-4320 Hattingen 16 (DE)**
Erfinder: **Merkel, Klaus, Schönscheidstrasse 8,**
**D-4300 Essen 13 (DE)**
Erfinder: **Hackler, Erich, Kettwiger Weinberg 6,**
**D-4300 Essen 18 (DE)**
Erfinder: **Jansen, Johann, Brentanostrasse 9,**
**D-4100 Duisburg 11 (DE)**
Erfinder: **Max, Arnold, Asbeckstrasse 9, D-4250 Bottrop**
**(DE)**
Erfinder: **Stender, Werner, Dückerstrasse 7,**
**D-4281 Raesfeld (DE)**
Erfinder: **Kruse, Reinhard, Zedernweg 28,**
**D-4230 Wesel 1 (DE)**
Erfinder: **Kainer, Hartmut, Dr., Sauerbruchstrasse 1a,**
**D-6200 Wiesbaden 12 (DE)**

(74) Vertreter: **BRÜCKNER, Raimund Dipl.-Ing.,**
**Lessingstrasse 16-18, D-6200 Wiesbaden (DE)**

(54) **Verfahren zur Herstellung von Katalysatorformlingen.**

(57) Die Erfindung bezieht sich auf ein Verfahren zur Herstellung von Katalysatorformlingen, bei welchem an $Fe_2O_3$, $Cr_2O_3$ oder eine sonstige Katalysatorkomponente, wie $TiO_2$, $NbO_2$, $WO_3$, $V_2O_5$, $MoO_3$ enthaltendes natürliches Rohmaterial unter eine Korngröße von etwa 0,25 mm absiebt, dieses abgesiebte Grundgemisch durchmischt, eine konzentrierte Schwefelsäure aufbringt und dieses Stoffgemisch mit einem Druck von ca. 500 bar an der hydraulischen Presse zu dem Formling preßt.

EP 0 218 014 A1

0218014
05.09.1985
KXR/KE/Sc
PA 3527

DIDIER ENGINEERING GMBH
Alfredstraße 28
4300 Essen 1

Verfahren zur Herstellung
von Katalysatorformlingen

Die Erfindung bezieht sich auf ein Verfahren zur Herstellung von Katalysatorformlingen.

Derartige Katalysatorformlinge werden für die Stickoxid-Minderung in Abgasen von Verbrennungseinrichtungen benutzt. Es ist bekannt, die Stickoxid-Minderung mittels reduzierender Stoffe wie CO, $NH_3$, $CH_4$, $H_2$ und dergleichen durchzuführen. Außerdem ist es bekannt, Katalysatorstoffe wie $TiO_2$, $WO_3$, $V_2O_5$, $MoO_3$, $Cr_2O_3$, $Fe_2O_3$ oder Mischungen dieser Stoffe sowie katalytisch wirksame Zusätze wie $WO_3$, $V_2O_5$, $MoO_2$, $Cr_2O_3$ als aktive Substanzen einzusetzen. Zusätze in Reinstform zu Trägersubstanzen sind teuer und aufgrund ihrer hohen Aktivität alterungsempfindlich und zudem schwer entsorgbar. Die Rückgewinnung der teuren aktiven Substanzen ist zwar wünschenswert, mit ihr ist jedoch ein hoher technischer und damit auch kostenmäßiger Aufwand verbunden.

Aufgabe der vorliegenden Erfindung ist es, ein einfaches und kostengünstiges Verfahren vorzuschlagen, mit welchem billige, alterungsbeständige und entsorgbare Substanzen zu hinreichend aktiven und festen Katalysatorformlingen verarbeitet werden können.

Bei der Herstellung von Katalysatorformlingen sind häufig dünne Stegstärken für Platten, Waben, Rohre und sonstige Gebilde herzustellen, wofür ausreichende Festigkeit gewährleistet werden muß. Hierfür sind normalerweise verhältnismäßig hohe Drucke bei homogener Druckverteilung notwendig. Dies

-4-

zu erreichen, ist bislang ohne größeren Anlagenaufwand nicht mögich. Herkömmliche Formlingherstellungsverfahren leiden deswegen darunter, daß der Formling sehr vorsichtig von der Form abgehoben und einem langen Temperungsvorgang unterworfen werden muß, um überhaupt eine haltbare Form zu erreichen. Es ist auch schon versucht worden, intermittierend zu pressen oder zu kalandrieren. Auch hierbei stellte sich jedoch heraus, daß der Formling sich nicht oder nur schwer handhaben läßt, insbesondere nicht leicht aus der Form zu bringen ist und auf unerwünscht lange Temperzeiten nicht verzichtet werden kann.

Die zuvor genannte Aufgabe wird in neuer Weise dadurch gelöst, daß man $Fe_2O_3$, $Cr_2O_3$ oder eine sonstige Katalysatorkomponente, wie $TiO_2$, $NbO_2$, $WO_3$, $V_2O_5$, $MoO_3$ enthaltendes natürliches Rohmaterial (wie Erz ohne vorherige Aufmahlung) unter eine Korngröße von etwa 0,25 mm absiebt, das abgesiebte Grundgemisch durchmischt, eine konzentrierte Schwefelsäure aufbringt und dieses Stoffgemisch mit einem Druck von ca. 500 bar an der hydraulischen Presse zu dem Formling preßt. Es hat sich gezeigt, daß sich durch die Aufgabe der konzentrierten Schwefelsäure die in dem natürlichen Erz vorkommenden Stoffe $Al_2O_3$, MgO, CaO und dergleichen schnell abbinden und ein sulfatisiertes Stützelement für den Formling bilden, welcher dadurch auch bei verhältnismäßig komplizierten und dünnen Strukturen eine hinreichende Stabilität für die Handhabung erhält. Die erwähnte Bildung von $MgSO_4$, $CaSO_4$ und dergleichen nach dem erfindungsgemäßen Verfahren verhindert darüberhinaus, daß in schwefeltrioxidhaltigen Abgasen eine Verkleinerung der bei der Herstellung entstehenden Mikroporen auftritt. Auf eine derartige Verkleinerung der Mikroporen sind offenbar bisherige Fehlschläge bei der Verwendung von $Fe_2O_3$ auf Aluminiumoxidträgern durchzuführen.

Es hat sich gezeigt, daß man vorteilhafterweise auf 100 g abgesiebtes Grundgemisch etwa 20 bis 60 ml, vorzugsweise 40 ml Schwefelsäure aufbringt. Durch diese verhältnismäßig geringe Menge an konzentrierter Schwefelsäure kann sichergestellt werden, daß die hygroskopischen Eigenschaften des nach dem erfindungsgemäßen Verfahren hergestellten Katalysatorformlings in vertretbaren Grenzen gehalten wird.

3

Bei dem erfindungsgemäßen Verfahren kann man auch eine zusätzliche Festigung durch Phosphatbindung erzielen, indem man - unter Inkaufnahme einer gewissen Deaktivierung der Katalysatorkomponenten durch Blockierung der Fehlstellen beispielsweise bei $Fe_2O_3/Fe_3O_4$-Gemischen - eine konzentrierte Schwefelsäure verwendet, welche bis zu 10 % Phosphorsäure, also nur ein verhältnismäßig geringer Anteil, beigemischt ist.

Das erfindungsgemäße Herstellungsverfahren wird vorzugsweise so durchgeführt, daß man das Grundgemisch auf einen plattenförmigen Unterstützungskörper aufbringt, indem man eine darauf aufgesetzte Außenform mit dem Grundmaterial unter leichtem Verdichten und Abstreifen füllt, auf die Form einen weiteren plattenförmigen Abdeckkörper auflegt und diese Einheit dem Preßdruck unterwirft. Die Form kann dabei Distanzhalter aufweisen.

Den Unterstützungskörper und den Abdeckkörper sprüht man vorteilhafterweise vor dem Einfüllen des Grundmaterials mit einem Trennmittel, vorzugsweise silikonhaltigem Material ein.

Die gesamte Einheit aus Unterstützungskörper, Außenform und Abdeckkörper kann somit insgesamt aus der Druckpresse entnommen und als solche dem Trocknungs- und Kalzinierungsvorgang unterworfen werden. Der Katalysatorformling wird dadurch hierbei keinen Beanspruchungen wie bei bisherigen Herstellungsverfahren ausgesetzt.

Die Trocknung wird vorzugsweise bei etwa 150 °C für eine Zeitdauer von 5 bis 500 Minuten ausgeführt, die Kalzinierung bei etwa 450 °C ebenfalls für eine Zeitdauer von etwa 5 bis 500 Minuten.

Es hat sich ferner als besonders vorteilhaft herausgestellt, daß man den Formling nach dem Kalzinierungsvorgang für etwa 1 bis 24 Stunden in dem Kalzinierofen beläßt und erst nach Abkühlung auf eine Temperatur zwischen etwa 20 und 200 °C dem Kalzinierungsofen entnimmt.

Danach können die fertigen, z.B. plattenförmigen Katalysatorformlinge in Kassetten eingeschoben und diese im Kraftwerk eingesetzt werden.

Die nach der Erfindung hergestellten Katalysatorformlinge weisen ein gutes Regelverhalten, hohe Umsätze und einen breiten Temperaturbereich mit hoher Aktivität auf.

0218014

05.09.1985
KXR/KE/Sc

PA 3527

DIDIER ENGINEERING GMBH
Alfredstraße 28
4300 Essen 1

Verfahren zur Herstellung
von Katalysatorformlingen

P a t e n t a n s p r ü c h e :

1. Verfahren zur Herstellung von Katalysatorformlingen, dadurch gekennzeichnet, daß man $Fe_2O_3$, $Cr_2O_3$ oder eine sonstige Katalysatorkomponente, wie $TiO_2$, $NbO_2$, $WO_3$, $V_2O_5$, $MoO_3$ enthaltendes natürliches Rohmaterial unter eine Korngröße von etwa 0,25 mm absiebt, das abgesiebte Grundgemisch durchmischt, eine konzentrierte Schwefelsäure aufbringt und dieses Stoffgemisch mit einem Druck von ca. 500 bar an der hydraulischen Presse zu dem Formling preßt.

2. Verfahren nach Anspruch 1, dadurch gekennzeichnet, daß man auf 1000 g abgesiebtes Grundmaterial etwa 20 bis 60 ml, vorzugsweise 40 ml Schwefelsäure aufbringt.

3. Verfahren nach Anspruch 1 oder 2, dadurch gekennzeichnet, daß man eine konzentrierte Schwefelsäure verwendet, welcher bis zu 10 % Phosphorsäure beigemischt ist.

4. Verfahren nach einem der Ansprüche 1 bis 3, dadurch gekennzeichnet, daß man das Grundgemisch auf einen plattenförmigen Unterstützungskörper aufbringt, indem man eine darauf aufgesetzte Außenform mit dem Grundmaterial unter leichtem Verdichten und Abstreifen füllt, auf die Form einen weiteren plattenförmigen Abdeckkörper auflegt und diese Einheit dem Preßdruck unterwirft.

5. Verfahren nach Anspruch 4, dadurch gekennzeichnet, daß man den Unterstützungskörper und den Abdeckkörper vor dem Einfüllen des Grundmaterials mit einem Trennmittel, vorzugsweise silikonhaltigem Material, einsprüht.

6. Verfahren nach Anspruch 4 oder 5, dadurch gekennzeichnet, daß man zur Temperung die Einheit aus Unterstützungskörper, Außenform und Abdeckkörper dem Trocknungs- und Kalzinierungsvorgang unterwirft.

7. Verfahren nach einem der Ansprüche 1 bis 6, dadurch gekennzeichnet, daß man die Trocknung bei etwa 150 °C bei einer Zeitdauer von 5 bis 500 Minuten ausführt.

8. Verfahren nach einem der Ansprüche 1 bis 7, dadurch gekennzeichnet, daß man die Kalzinierung bei etwa 450 °C für eine Zeitdauer von 5 bis 500 Minuten ausführt.

9. Verfahren nach einem der Ansprüche 1 bis 8, dadurch gekennzeichnet, daß man den Formling nach dem Kalzinierungsvorgang für etwa 1 bis 24 Stunden in dem Kalzinierungsofen beläßt und erst nach Abkühlung auf eine Temperatur zwischen etwa 20 und 200 °C dem Kalzinierungsofen entnimmt.

# 0218014

## EUROPÄISCHER RECHERCHENBERICHT

Nummer der Anmeldung

EP 86 10 9566

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | DE-B-1 143 510 (MONSANTO) --- | | B 01 J 37/00 |
| A | FR-A-2 203 674 (THE DOW CHEMICAL CO.) --- | | |
| A | US-A-4 061 596 (K. MATSUSHITA) ----- | | |

| | |
|---|---|
| | RECHERCHIERTE SACHGEBIETE (Int. Cl.4) |
| | B 01 J 37/00 |

Der vorliegende Recherchenbericht wurde für alle Patentansprüche erstellt.

| Recherchenort | Abschlußdatum der Recherche | Prüfer |
|---|---|---|
| DEN HAAG | 19-12-1986 | DEVISME F.R. |